Europäisches Patentamt

(19) European Patent Office

Office européen des brevets

(11) Publication number: **0 005 961**

**A1**

(12) # EUROPEAN PATENT APPLICATION

(21) Application number: 79300926.7

(22) Date of filing: 24.05.79

(51) Int. Cl.²: **B 29 C 3/00**
**B 29 C 29/00**

(30) Priority: 25.05.78 GB 2231778

(43) Date of publication of application:
12.12.79 Bulletin 79/25

(84) Designated Contracting States:
BE GB NL

(71) Applicant: REHSIF S.A.
c/o Revisa Treuhand A.G. Rue Saint-Pierre 24
CH-1700 Fribourg(CH)

(72) Inventor: Fisher, Edwin George
4, Palace Court Bayswater Road
London W2 4HR(GB)

(72) Inventor: Klein, Erich Robert
Foddington Farm Babcary
Somerton Somerset(GB)

(72) Inventor: Smith, Harold Verity
10, Ch. du Barbolet
CH-1213 Onex(CH)

(74) Representative: Clark, Stuart V. E.
STUART CLARK & CO. "Blandings" Bickleigh
Tiverton Devon, EX16 8RH(GB)

(54) Process and apparatus for moulding plastics articles.

(57) A plastics article having a relatively large surface area compared with its thickness is moulded by extruding into the female mould component (60) a molten plastics material in a thick sheet at low pressure through a nozzle (24) having a width equal to the transverse surface dimension of the article. At the same time, the female mould component is traversed beneath the nozzle at a speed which varies as a function of the instantaneous thickness of the transverse section of the article. The female mould component is carried on a conveyor (90) which is drawn by an electric motor (92) whose speed is controlled by a punched card (106), template, or the like. After leaving the extrusion nozzle the female mould component is deposited on one platen (94) of a press (96) the other platen (98) of which carries the male mould component (62). The mould is closed under pressure and the article is cured.

./...

FIG.8.

-1-

This invention relates to a process and apparatus for the moulding of articles in plastics materials, and particularly (although not exclusively) the moulding of articles which have a surface area which is large in comparison with their average thickness as measured always in a fixed direction - usually perpendicular to the largest face. A typical example of such articles is a pallet for the transport and stacking of goods, and the term "pallet" will be used herein as a generic description of articles produced by the process according to the present invention.

A pallet has the following general characteristics:

1. it has at least one working surface which is substantially flat and continuous over the whole or greater part of the body of the pallet;

2. its overall depth measured between the working surface in 1. above and the mean plane of the opposite side of the pallet is small compared with the extent of the working surface;

3. the thickness of the material of the pallet measured in the direction of the overall depth varies considerably from point to point over the full extent of the pallet.

Thus, in the conventional case of a pallet which is rectangular in plan and bounded, in edgewise elevation, by two parallel planes (i.e., it is a rectangular prism) the overall depth is the normal distance between the planes; but the thickness of the material measured along the normal to the two planes may vary from a minimum representing the general wall thickness of the working surface to a maximum at any stiffening rib or spacing or mounting boss or like local formation.

It is an object of the present invention to facilitate the moulding of pallets from mixed thermoplastic scrap material which may contain more than one polymer. Machines are commercially available which plasticise mixed theremoplastics and deliver the mixture in molten

-2-

form through a nozzle. One such machine is described in U.K. Patent No.1,367,297 and is sold under the trade name "Reverzer".

In recycling machines such as that above noted it is necessary to subject the mixed thermoplastic scrap to the minimum residence time at high temperatures. For this reason such machines cannot use the conventional type of screw having a length/diameter ratio of the order of 20:1 which are used in the regular types of injection moulding machine and which produce the high extrusion or injection moulding pressures of the order of $2000Kg/cm^2$ which are customary. For example, in the "Reverzer" machine mentioned above, the screw has a length/diameter ratio of 4:1 and the nozzle pressure is of the order of $30 - 40$ $Kg/cm^2$ i.e., $1\frac{1}{2}$ to 2% of the usual nozzle pressure in injection moulding machines. Even double the said recycling machine nozzle pressure is still less than 5% of the nozzle pressure of a conventional injection moulding machine. The viscosity of the melt is high in relation to such relatively low nozzle pressures, being not significantly different from that obtained in a conventional injection moulding machine, and hence the combination of high viscosity and relatively low nozzle pressure as exemplified above, poses a considerable problem for filling a large and complicated mould such as that for a pallet.

It is, therefore, another object of the invention to provide a method and apparatus for moulding pallets from the normal output of a recycling machine such as that referred to above.

According to the present invention, a pallet is moulded by delivering into a female mould component a thermoplastics melt at relatively low nozzle pressure in a thick sheet of width to suit the corresponding transverse dimension (width) of the mould component and traversing it longitudinally relative to the nozzle at a speed which is a function of the thickness of the moulded product at successive cross-sections along the length of the mould. A male mould component is then introduced to close the mould under pressure, and the mould is cooled.

The term "transverse" and "longitudinal" as used above mean, respectively, parallel to and perpendicular (in the direction of traverse) to the width of the thick sheet. They may sometimes be arbitrary, as in the case of a square mould.

Preferably the female mould component is traversed on a conveyor whose speed is regulated to suit the mass of melt required to be discharged into the mould through the nozzle at any given instant during each traverse of the said mould component.

Advantageously, a pallet having opposed parallel flat surfaces separated by internal spacers or reinforcing ribs is moulded in two parts each constituting one half of the finished pallet lying on either side of the median plane mid-way between and parallel to the opposed flat surfaces, the two parts being subsequently united on the median plane.

The invention includes apparatus for carrying out the process defined above comprising a thermoplastics recycling machine having a nozzle extending for the full transverse dimension of the female mould component; means for traversing the mould component relative to the nozzle so that molten material delivered by the nozzle is laid therein, and means for introducing a male mould component to close the mould.

Conveniently, the traversing means is adapted to maintain a substantially constant gap between the aperture of the nozzle and the surface of the female mould component.

The drive of the traversing means may be a motor whose speed is variable under the control of a unit which is operative to vary the speed of traverse in accordance with local conditions in cross-section of the moulded pallet.

Ideally, the speed control unit is pre-programmed to respond to the designed changes in cross-section of

-4-

the pallet along the line of traverse.

It is preferred that the traversing means deliver the filled female mould component to a press for introduction of the male mould component to close the mould.

A preferred embodiment of the invention will now be particularly described with reference to the accompanying drawings in which:

Figure 1 is a plan view, partly in section, of a nozzle for delivering a mixed thermoplastics melt at relatively low pressure;

Figure 2 is a half-sectional elevation of Figure 1, the section being taken on the line II-II of Figure 3;

Figure 3 is a section on the line III-III of Figure 2;

Figure 4 is a half-plan, half underplan view of a female mould component;

Figure 5 is a longitudinal section on the line V - V of Figure 4;

Figure 6 is a longitudinal section corresponding to Figure 5 through a male mould component;

Figure 7 is a longitudinal section corresponding to Figures 5 and 6 through a moulded half-pallet, and

Figure 8 is a schematic layout of a plant for carrying out the process.

Referring to the drawings, Figure 7 illustrates in transverse section one half 10 of a finished pallet which has a flat load-bearing web 12 whose loading surface 14 is interrupted at nine symmetrically spaced points by integral spacers 16 in the form of hollow truncated conical bosses. The web 12 is reinforced between the integral spacers 16 by moulded stiffening ribs 18. A complete pallet is made up from two identical half-pallets assembled back-to-back so that their spacers 16 meet and are welded or otherwise secured together.

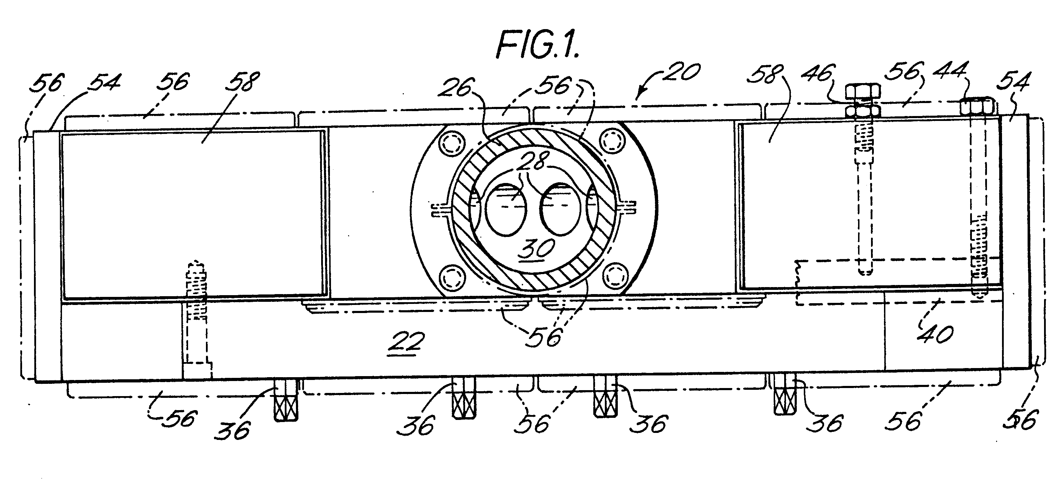

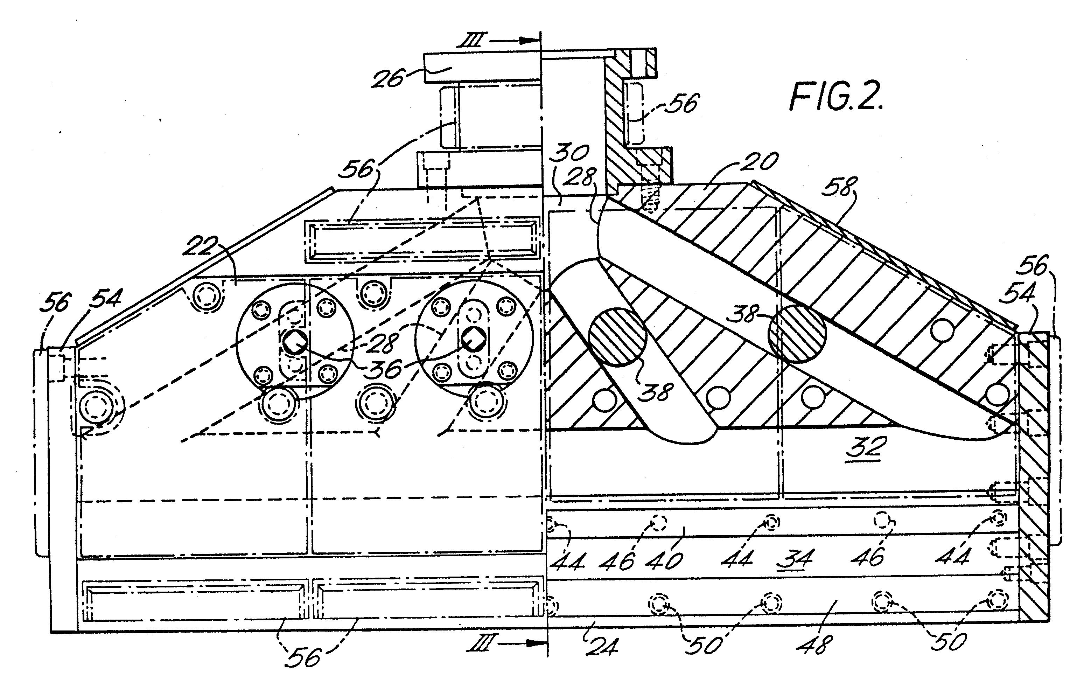

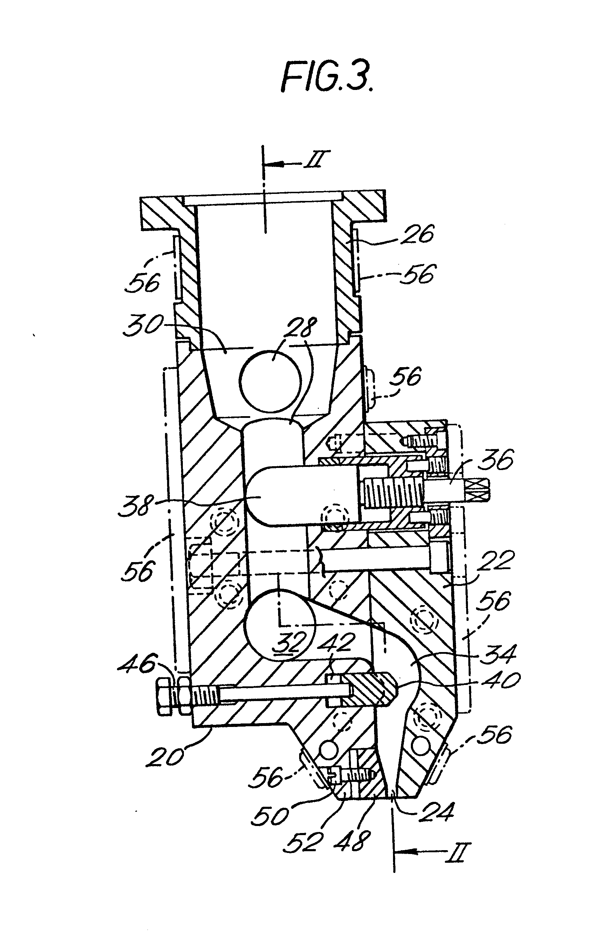

The nozzle which fills the female mould component is shown in Figures 1 - 3. It consists of an elongated, generally rectangular body 20 whose length is substantially

-5-

equal to the transverse dimension of the moulded half-pallet 10.   A die lip or extrusion block 22 is bolted thereto and extends along one side of the body 20 and has the extrusion aperture 24 (Figure 3) formed therein.   The body 20 is carried on a thermoplastics recycling machine (not shown) by an adaptor 26.   Within the body 20 four passageways 28 lead symmetrically from a cavity 30 at the base of the adaptor 26 to a distribution chamber 32.   The latter registers, all along one side, with a curved extrusion canal 34 leading to the nozzle aperture 24.   Each passageway 28 is controlled by a restrictor valve 36 operating a throttle plug 38 of the same diameter as the passageway and having a hemispherical end so that, when fully screwed down, the plug 38 completely obturates the passageway.

The curved canal 34 is also variably choked by a restrictor bar 40 which slides in a recess 42 opening through the face of the body 20 to which the extrusion block 22 is bolted.   The restrictor bar 40 is adjusted by alternate "pull" and "push" screws 44, 46.   Below the restrictor bar 40 the extrusion canal 34 tapers down at an included angle of about $20^{\circ}$ to the nozzle aperture 24 which itself is parallel-sided.   The precise design of this part of the extrusion canal can be varied by the provision, on the lower edge of the body 20, of a die block 48 held by bolts 50 in a recess in a lip 52 running along the bottom edge of the body 20.   The body 20 and the extrusion block 22 are further clamped together by end plates 54 which serve to close the ends of the distribution chamber 32, the extrusion canal 34 and the nozzle aperture 24.

The assembly of the body 20, block 22, adaptor 26 and end plates 54 constitutes an extrusion unit which is blanketed on most exposed surfaces by electric heaters 56.   The chamfered top surfaces of the body 20 are covered

-6-

by sheets or panels 58 of insulation.

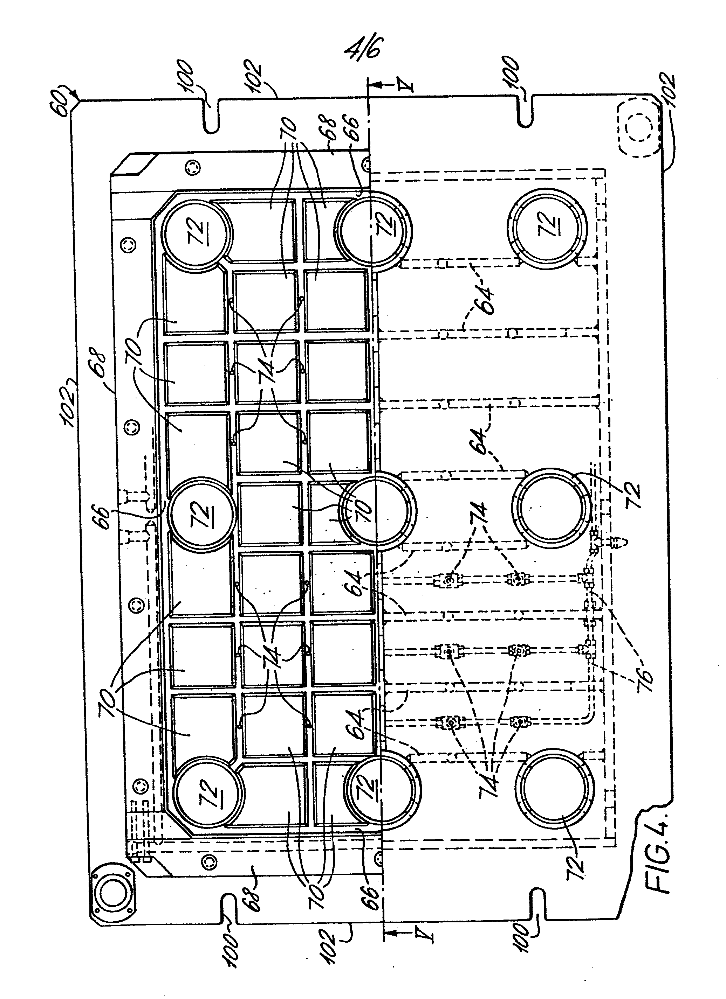

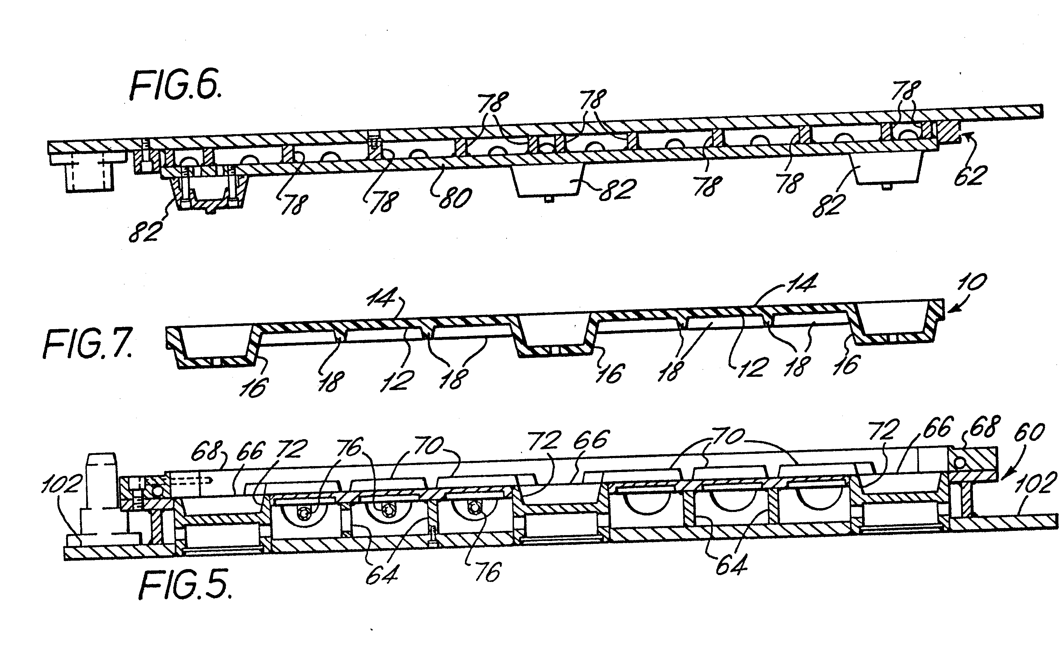

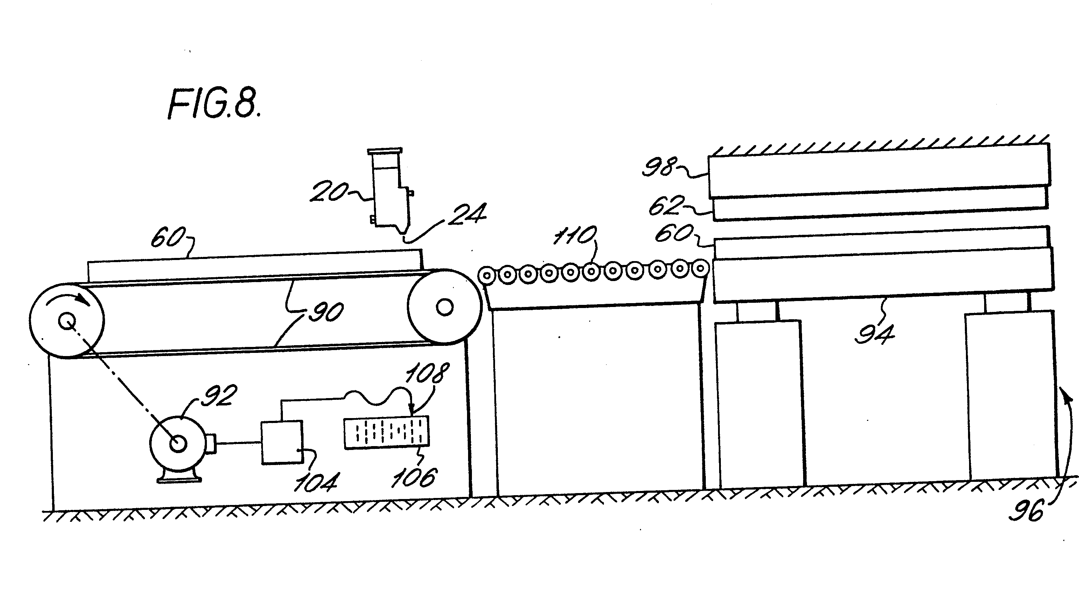

Figures 4 - 6 illustrate a typical mould assembly consisting of a female component 60 (Figures 4 and 5) and a male component 62 (Figure 6). The female component 60 is basically a hollow rectangular box subdivided by internal transverse partitions 64 which are apertured at alternate ends to allow coolant to flow in a tortuous path through the box. The top wall 66 of the box, which bridges the partitions, is surrounded by an upstanding rim 68 whose height above the top wall 66 determines the maximum wall thickness of the half-pallet 10, which for the pattern illustrated in Figure 7 is the cross-sectional dimension from the loading surface 14 to the bottom of the rib 18. The top wall 66 of the hollow box carries a series of mainly rectangular high heat conductivity blocks 70 with chamfered edges. Most of the blocks are square and all are of the same thickness which is equal to the depth of a rib 18. These blocks are secured to the top wall 66 of the hollow box in a regular pattern as seen in the upper half of Figure 4. Nine conical pockets 72 open through the top wall 66 to form the spacers 16 (Figure 7) on the half-pallet 10.

Between certain pairs of adjacent blocks 70, and also in symmetrical pattern over the whole surface area, the top wall 66 is drilled at 74 and each drilling is connected to an air pressure trunk 76. These drillings are used to aid parting of the half-pallet 10 from the female mould component 60 by injecting air under pressure when the moulding has cooled.

The male mould component 62 is effectively a plain hollow box constructed similarly to that of the female mould component 60 and similarly partitioned at 78 for the tortuous direction of the flow of coolant between the upper and lower flat walls of the box. The lower wall 80 forms the loading surface 14 of the half-pallet 10, and carries truncated conical bosses 82 which are dimensioned to nest into the pockets 72 of the female

-7-

mould component when the male component closes the mould.

It will be understood that the shape and pattern of the half-pallet 10 shown in Figure 7 is only one example of a product which can be moulded by the process according to the invention. Other shapes and patterns will involve corresponding changes in the structure of the mould components 60, 62.

In the performance of the process according to the present invention, as shown diagrammatically in Figure 8, a female mould component 60 is supported horizontally on a conveyor 90 beneath the nozzle aperture 24 (Figures 1 - 3) of a thermoplastics recycling machine (not shown) so that the transverse dimension of the component (i.e. parallel to the partitions 64) is parallel to the aperture 24. With the latter spaced a short distance above one end of the female mould component 60, molten thermoplastics is extruded at relatively low pressure and simultaneously the mould component 60 is traversed by the conveyor 90 longitudinally so that a carpet or layer of the melt is spread over the top wall 66 and blocks 70. The speed of traverse of the female mould component 60 clearly determines the thickness of the carpet or layer of melt deposited on the top wall 66, and this will be governed by controlling the drive 92 to the conveyor 90 so as to ensure that when the male mould component 62 is introduced and the mould is closed, there is sufficient material to fill all the cavities. Where these vary in size, the speed of traverse is reduced so as to thicken the carpet locally. For example, when traversing the female mould component 60 beneath the nozzle aperture 24, there would be a brief dwell or speed reduction as each line of pockets 72 passes beneath the aperture.

After each female mould component 60 has completed its traverse, it is passed to the lower platen 94 of a press 96, the top platen 98 of which carries the male component 62. The press 96 is then operated to close the mould under pressure.

-8-

The design of the traversing conveyor 90 is optional, but in one form (not illustrated) a pair of parallel endless chains are spaced apart slightly more than the width or transverse dimension of the female mould component 60 and are inter-connected at intervals by transverse bearers whose ends are supported by wheels or rollers on a rigid track which serves both to carry the weight of the loaded conveyor and to locate the bearers transversely. The bearers are spaced along the chains by sub-multiples of the longitudinal dimension of the female mould component 60 and have upstanding spring-loaded pegs or dowels to engage in open slots 100 (Figure 4) provided in each end of an apron 102 which projects on all sides of the component around the base thereof. The slots serve to locate the component 60 transversely, and the pegs engaging the slots at the rear end of the apron transmit the drive from the chains to propel the female mould component 60 longitudinally beneath the nozzle aperture 24. An idle-roller conveyor 110 is shown between the traversing conveyor 90 and the lower platen 94 of the press 96.

The control for the drive 92 is shown schematically as a punched card reader 104. A punched card 106 carries the appropriate data relating to the pattern of variations in thickness of a half-pallet 10 and is scanned by a pick-up 108 during the traverse of a mould component 60 beneath the nozzle aperture 24. The signals generated by the pick-up 108 are converted in the reader 104 into voltage or current variations which govern the speed of the drive motor 92. Obviously, alternative forms of conveyor speed control can be used if preferred.

Although the plant of Figure 8 is shown as a collocation of separate items of equipment, it may be designed as an integrated unit.

The foregoing description with reference to the drawings is illustrative only of the invention, the scope of which is defined as the laying, in a female mould component, of a sheet or carpet of molten theremoplastics material extruded at a relatively low pressure while the said component is being traversed relative to the nozzle at a speed which can be varied as a function of the thickness of the moulded product at successive transverse cross-sections; and the subsequent introduction to the female mould component of a male component under pressure. In this context "thickness" means not only the depth of solid material at a given cross-section but also the total volume of material per unit length required to form a feature of shape of the product such as the hollow conical pockets 72 where the wall thickness is required to be maintained (if not increased) over their surface area. Hence during the relative traverse of the female mould component 60 and the extrusion nozzle 24, a greater volume of melt is required to be deposited over the zone which includes such pockets than at other transverse cross-sections where there is minimal change in shape or pattern. Thus, thickness in this context is defined as mass of material per unit length of product measured in the direction of traverse.

The invention extends to the apparatus for putting the process into effect and to the moulded product. In the foregoing description with reference to the drawings, the latter has been described as a pallet which is made up of two separate but identical mouldings 10, each produced in identical manner, which are brought together after stripping from the mould and welded or otherwise permanently mated back-to-back at their zones of contact on a median plane between and parallel to their working faces 14. Such mouldings, referred to above for convenience as "half-pallets" are finished products in their own right, whether or not they are subsequently paired to make a composite article.

Although the nozzle body 20 has been described as designed to be fitted to an existing thermoplastics recycling machine such as that sold under the trade mark "Reverzer", it may be an integral part of a low-pressure extrusion machine designed specifically for use in the process according to the present invention.

## C L A I M S

1. Process for the production of moulded products having a relatively large surface area from a low-pressure source of molten plastics comprising delivering the low pressure molten material through a nozzle in a thick sheet of a width to suit the transverse dimension of the mould; traversing the female component of the mould past the nozzle at a speed which is a function of the thickness of the moulded product at any given point; introducing the male component to close the mould under pressure, and cooling the mould.

2. The process according to claim 1 wherein the female mould component is traversed on a conveyor whose speed is regulated to suit the mass of melt required to be discharged into the mould through the nozzle at any given instant during each traverse of the said mould component.

3. The process according to claim 2 wherein the speed of the conveyor is controlled by a control unit whose output varies the voltage fed to the conveyor drive motor in response to local variations in thickness of the finished pallet.

4. Apparatus for carrying out the process according to claim 1 comprising a thermoplastics recycling machine having a nozzle extending for the full transverse dimension of the female mould component; means for traversing the mould relative to the nozzle so that molten material delivered by the nozzle is laid in the female mould component, and means for introducing a male component to close the mould.

5. Apparatus according to claim 4 wherein the traversing means maintains a substantially constant gap between the aperture of the nozzle and the surface of the female mould component.

6. Apparatus according to claim 4 or 5 wherein the drive for the traversing means is a variable speed motor,

0005961

and programming means is coupled thereto to control the speed of traverse in accordance with local variations in the cross-section of the moulded pallet.

7.  Apparatus according to claim 6 wherein the programming means is of the kind which can be set up in advance of a traverse from the designed changes in cross-section of the pallet along the line of traverse.

8.  Apparatus according to any of claims 4 - 7 wherein the traversing means delivers the filled female mould component to a press which introduces the male mould component thereto under pressure.

9.  Apparatus substantially as hereinbefore described with reference to the accompanying drawings.

10.  The process for moulding a pallet substantially as hereinbefore described.

FIG.1.

FIG.2.

3/6

FIG.3.

FIG.4.

FIG.6.

FIG.7.

FIG.5.

FIG.8.

# EUROPEAN SEARCH REPORT

**European Patent Office**

Application number

EP 79 300 926.7

## DOCUMENTS CONSIDERED TO BE RELEVANT

| Category | Citation of document with indication, where appropriate, of relevant passages | Relevant to claim |
|---|---|---|
| | DE - A - 2 552 334 (THE FURUKAWA ELECTRIC)<br>* claim 1, page 2, lines 23 to 29 * | 1,4, 10 |
| D | GB - A - 1 367 297 (MITSUBISHI)<br>* claim 1 * | 1 |
| A | DE - A - 2 256 519 (GEBRÜDER BÜHLER)<br>* fig. 3 * | 10 |
| A | DE - A - 2 241 289 (SICOPAL S.A.)<br>* fig. 1 * | 10 |
| A | DE - A - 2 162 080 (SOCIETE BORDELAISE MATIERES)<br>* page 3, lines 1 to 24 * | |
| A | DE - U - 7 245 226 (SVENSK HARDBETON-TECHNIK)<br>* fig. 2, 3 * | |
| A | DE - A - 2 608 306 (DREYER)<br>* fig. 7 * | |
| A | US - A - 3 687 784 (YOSHIO OHNO et al.)<br>* fig. 2 * | |

**CLASSIFICATION OF THE APPLICATION (Int. Cl.³)**

B 29 C   3/00
B 29 C  29/00

**TECHNICAL FIELDS SEARCHED (Int.Cl.³)**

B 29 C   3/00
B 29 C   5/00
B 29 C  29/00
B 29 D  31/00
B 29 F   1/06

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| X | Place of search<br>Berlin | Date of completion of the search<br>04-09-1979 | Examiner<br>BITTNER |

EPO Form 1503.1   06.78